# FASCICULE DE BREVET EUROPEEN

(11) **EP 3 125 412 B1**
(45) Date de publication et mention de la délivrance du brevet: **26.03.2025**
(21) Numéro de dépôt: 16181587.3
(22) Date de dépôt: 28.07.2016
(51) Int. Cl.: H02K 1/278, H02K 3/52, H02K 7/102, H02K 7/106, H02K 7/12, H02K 11/215, H02K 21/16, H02K 49/10, E06B 9/90

(54) **MACHINE TOURNANTE SYNCHRONE AUTOPILOTÉE À DISPOSITIF DE FREINAGE**
SELBSTGESTEUERTE SYNCHRON UMLAUFENDE MASCHINE MIT BREMSVORRICHTUNG
SELF-CONTROLLED SYNCHRONOUS ROTATING MACHINE WITH BRAKING DEVICE

(30) Priorité: 30.07.2015 FR 1557338
(43) Date de publication de la demande: 01.02.2017
(73) Titulaire: BHG, 68100 Mulhouse (FR)
(72) Inventeur: PASQUIER, Patrick, 74300 Cluses (FR); VUARCHEX, Alain, 74970 Marignier (FR)
(74) Mandataire: Littolff, Denis

(56) Documents cités:
- EP-A1- 0 783 072
- US-A- 4 251 758
- US-A1- 2005 184 691

## Description

La présente invention a trait à une machine tournante synchrone autopilotée de type moteur sans balai munie d'un dispositif de freinage et d'immobilisation du rotor.

Ces moteurs comportent classiquement un stator fixe muni de bobines fonctionnant en électroaimants générant des champs magnétiques statoriques d'amplitudes et de phases variables, fonction de l'alimentation en courant de la bobine. Cette alimentation est en pratique asservie à la position des aimants permanents du rotor, d'où l'autopilotage, et donc à l'orientation des champs magnétiques rotoriques. Des capteurs adéquats (par exemple à effet Hall) détectent à chaque instant la position angulaire précise du rotor, en vue d'en déduire la phase à donner aux champs magnétiques statoriques par les courants d'alimentation (il s'agit en général d'une alimentation triphasée). Les bobines du stator sont en fait alimentées de manière à créer en permanence, sur la périphérie du rotor, des champs magnétiques déphasés, par exemple en quadrature, aux champs magnétiques rotoriques. Le rotor, dont les champs magnétiques cherchent à s'aligner à chaque instant sur les champs magnétiques statoriques, est alors entraîné en rotation, selon le fonctionnement classique des machines électriques tournantes. La quadrature de phase des champs magnétiques assure la création d'un couple moteur maximal.

La régulation de la vitesse de fonctionnement du moteur sans balai s'effectue en modulant l'intensité du courant dans les bobines statoriques. Une augmentation de ladite intensité revient à accélérer la vitesse de rotation du moteur, alors qu'une diminution a l'effet inverse. La modulation de l'intensité des courants d'alimentation permet également la gestion du couple moteur. La commande s'effectue par des moyens de pilotage électroniques qui gèrent très schématiquement d'une part les signaux en retour des capteurs détectant la position du rotor et d'autre part la forme et l'intensité des courants d'alimentation des bobines du stator.

La question du freinage de ces moteurs sans balai est la même que pour les moteurs à courant continu avec collecteur, puisqu'en l'absence d'alimentation, un tel moteur n'a en général qu'une capacité de freinage limitée, bien inférieure au besoin réel, ce freinage « naturel » résultant en pratique du « couple de détente » ou « cogging torque ». Lorsque les bobines statoriques cessent d'être alimentées, le moteur est également freiné par le réducteur mécanique placé sur l'arbre de transmission couplé au rotor, qui génère un couple résistant s'ajoutant au couple de détente. Ce type de freinage naturel non contrôlé n'est cependant pas satisfaisant et surtout pas suffisant dans nombre d'applications de ces moteurs.

Des machines électriques tournantes synchrones autopilotées similaires de type moteur sans balai sont notamment décrites dans les documents US2005/184691 A1, US4251758 A et EP0783072 A1.

La présente invention a pour objet une machine électrique tournante synchrone autopilotée de type sans balai, telle que définie dans la revendication indépendante 1.

Ainsi, dans une application préférentielle de l'invention à la motorisation de volets roulants, dans laquelle les moteurs comportent dans la plupart des cas au moins un réducteur, et pour laquelle un freinage sans qu'il y ait nécessairement blocage peut être mis en oeuvre, le couple de freinage à appliquer est variable, pouvant aller jusqu'à deux fois le couple moteur déclaré, la vitesse de descente maximale du volet roulant étant de l'ordre de 150 mm/s. Un dispositif de freinage adéquat doit répondre aux contraintes qui en découlent.

L'un des objectifs de la présente invention est par ailleurs de ne pas lier la fonction de freinage à celle de commande et d'alimentation des bobines statoriques, et de proposer un dispositif de freinage et d'immobilisation simple à mettre en œuvre et efficace pour l'immobilisation du rotor. Dans la configuration de machine tournante de l'invention, le freinage résulte certes de l'électronique, mais le blocage en est indépendant. En cas de glissement, il est d'ailleurs possible de limiter la descente de la charge en court-circuitant les bobinages de sorte à créer une contre FEM. Le but est cependant toujours d'immobiliser l'arbre moteur en l'absence de courants électriques d'alimentation.

Pour aboutir à ces objectifs, le dispositif de freinage et d'immobilisation de la machine tournante synchrone de l'invention, qui comporte au moins un aimant permanent monté fixe par rapport au stator au voisinage d'une extrémité du rotor, est tel que les aimants permanents équipant le pourtour du rotor (20) comportent des prolongements dépassant du stator dans une direction parallèle à l'axe de rotation du rotor, au voisinage desquels est fixé au moins un aimant permanent du dispositif de freinage et d'immobilisation, chaque aimant du dispositif de freinage et d'immobilisation étant logé dans un boîtier fixé en appui contre une face frontale d'une culasse magnétique polaire du stator entourant les bobines statoriques.

Cette solution simple génère un couple statique qui contribue à solliciter le rotor en des positions prédéterminées. Elle agit de manière importante au freinage lorsque les bobines statoriques ne sont pas alimentées, c'est-à-dire lorsque le moteur n'est pas activé. Lorsqu'il est alimenté, le dispositif de freinage et d'immobilisation de l'invention n'est pas pénalisant car l'aimant permanent est positionné de telle sorte que le champ magnétique moyen qu'il génère dans la structure est nul.

Il s'agit au surplus d'une solution qui peut présenter un avantage très intéressant dans la mesure où, associée à une particularité structurelle de la machine tournante de l'invention, elle permet la mise en œuvre simultanée de deux fonctions.

Cette configuration particulière dans laquelle les portions d'extrémité des aimants rotoriques sortent de l'ensemble statorique impose un positionnement très localisé du ou des aimants du dispositif de freinage et d'immobilisation.

Mais elle permet aussi d'optimiser le fonctionnement d'ensemble du moteur car, outre la fonction de freinage objet de l'invention, cette structure facilite la détection de la position angulaire du rotor par des capteurs de type à effet Hall, qui bénéficient du prolongement des ferrites. Il est patent que, pour fonctionner optimalement, ces capteurs doivent être positionnés proches des aimants qu'ils sont chargés de détecter, ce qui est bien évidemment le cas avec cette solution.

Selon une première possibilité, dans l'hypothèse où lesdits prolongements sont polarisés dans une direction radiale, la polarisation des aimants adjacents du pourtour du rotor étant toujours inversée, au moins un aimant du dispositif de freinage et d'immobilisation est placé, dans une direction radiale, en regard des prolongements dépassant du stator.

Selon une seconde possibilité, si lesdits prolongements sont polarisés dans une direction axiale, la polarisation de deux aimants adjacents du pourtour étant également toujours inversée, au moins un aimant du dispositif de freinage et d'immobilisation est placé, dans une direction axiale, en regard des extrémités des prolongements dépassant du stator.

Dans cette même hypothèse où les prolongements sont polarisés dans une direction axiale, la polarisation de deux aimants adjacents du pourtour du rotor étant toujours inversée, au moins un capteur par exemple à effet Hall peut être placé sur une carte électronique disposée au voisinage et en regard des extrémités des prolongements dépassant du stator. On bénéficie alors doublement de la structure particulière précitée dans laquelle des prolongements axiaux des aimants dépassent du stator.

Une structure simple permettant un positionnement précis du ou des aimants permanents du dispositif de freinage et d'immobilisation consiste alors, comme mentionné auparavant, à loger chaque aimant, dans l'hypothèse où il y en plusieurs, dans un boîtier fixé en appui contre une culasse magnétique polaire du stator entourant les bobines statoriques. Cet appui permet un positionnement précis dans une direction axiale, mais la fixation à ladite culasse offre également la possibilité d'un positionnement fin dans une direction radiale.

Pour rester dans une perspective de simplicité, le ou les aimants de ce dispositif de freinage et d'immobilisation peu(ven)t prendre la forme d'une pastille, forme aisément disponible un peu partout à très faible coût.

En pratique, le dispositif de freinage de l'invention est de préférence constitué, et cela sera le cas dans la plupart des hypothèses, d'un unique aimant permanent. De même, bien que les deux configurations de machines tournantes, à rotor interne (entouré du stator) ou à rotor externe (entourant le stator), puissent exister et fonctionnent de la même manière avec un dispositif de freinage et d'immobilisation comme décrit auparavant, la variante à rotor interne, placé à l'intérieur du stator, est de préférence utilisée.

L'invention concerne également l'utilisation d'une machine électrique tournante selon la description ci-dessus pour l'entrainement d'un moyeu de volet roulant motorisé. Il s'agit d'une application préférentielle dans le contexte de laquelle le dispositif de freinage utilisé fonctionne de manière très satisfaisante.

L'invention va à présent être décrite plus en détail, en référence aux figures annexées, pour lesquelles :
- la figure 1 est une vue en perspective éclatée du stator d'un moteur synchrone autopiloté muni d'un dispositif de freinage et d'immobilisation selon l'invention ;
- la figure 2 montre une vue partielle, également en perspective, dudit stator assemblé et muni du dispositif de freinage et d'immobilisation ; et
- la figure 3 représente une vue perspective d'un moteur synchrone complet, c'est-à-dire doté de son rotor et d'un flasque de fermeture non assemblé et laissant apparaître le dispositif de freinage et d'immobilisation de l'invention.

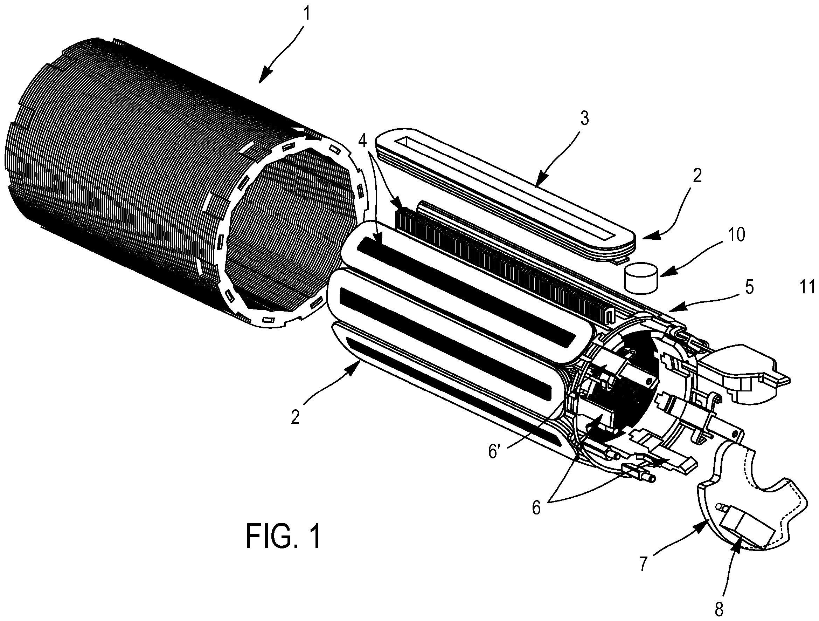

En référence à la figure 1, le stator du moteur synchrone autopiloté de l'invention comporte une culasse magnétique périphérique (1) cylindrique et des bobines statoriques (2) chacune bobinée sur une carcasse (3). Ces bobines (2) et leurs carcasses (3) sont placées autour de reliefs allongés axiaux (4) formés par des dents périphériques, pratiqués dans des tôles dont l'empilement forme une couronne polaire statorique (5) feuilletée. L'une de ces bobines (2) est représentée à distance de la couronne statorique (5), et l'unité qu'elle forme avec sa carcasse (3) apparaît clairement. Lorsqu'elles sont positionnées, les bobines (2) sont de fait placées entre ladite couronne statorique (5) et la culasse magnétique périphérique cylindrique (1) également feuilletée. L'extrémité radiale libre des reliefs allongés (4), dépassant des carcasses (3) des bobines (2) lorsque ces dernières sont positionnées, sert d'ailleurs au positionnement et à la fixation de la couronne statorique (5) dans la culasse (1) périphérique.

L'extrémité de ladite couronne statorique (5) apparaissant à la droite de la figure 1 comporte des broches de fixation (6) et de connexion (6') réparties sur sa périphérie, les broches (6) servant notamment à positionner la carte (7) comportant un connecteur électronique (8), alors que les broches de connexion (6') comportant une extrémité conductrice sont prévues pour la connexion des bobines (2), constituant de fait trois groupes de bobines alimentées par les trois phases d'un courant triphasé. Cette carte électronique (7) comporte par ailleurs également les capteurs de position du rotor, par exemple à effet Hall.

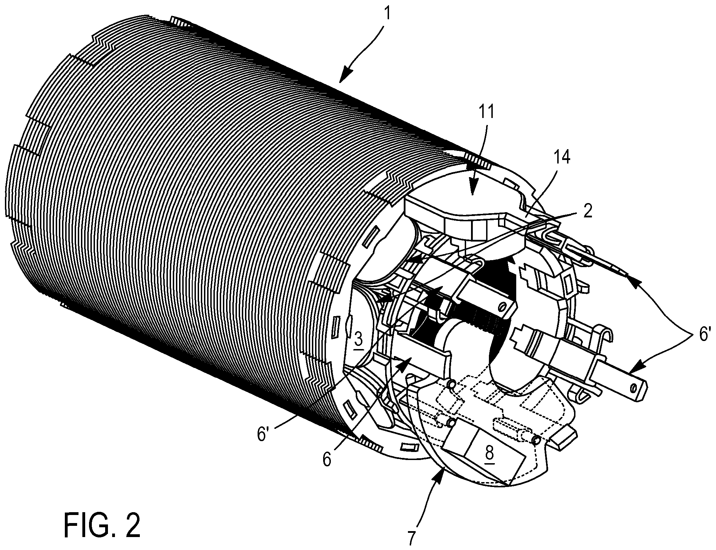

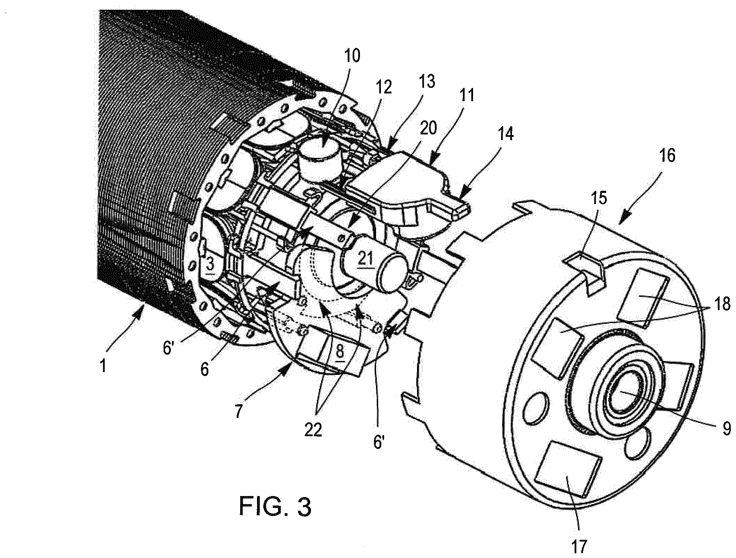

L'aimant permanent (10), en l'espèce sous forme d'une pastille, ce qui n'est nullement une forme limitative, est logé dans un boîtier (11) fixé au stator, comme cela est montré en figure 2. Dans cette position du boîtier (11), l'aimant permanent (10) est localisé - par rapport aux autres composants - comme cela apparaît dans la représentation de la figure 3, qui illustre une variante possible : il est placé radialement par rapport au rotor (20) qui est présent dans cette figure. Ce rotor (20) est également constitué de tôles empilées, et il n'est essentiellement visible dans la figure (3) qu'à travers son arbre (21) de transmission et ses aimants permanents périphériques (22). Dans la configuration représentée, ces derniers dépassent axialement de l'enveloppe statorique, de sorte que l'aimant permanent (10) du dispositif de freinage et d'immobilisation peut être positionné, dans son boîtier (11), radialement en regard des portions d'extrémité dépassantes desdits aimants permanents (22) recouvrant le pourtour de la carcasse polaire feuilletée du rotor (20). Les capteurs situés sur la carte (7) se trouvent eux-mêmes très proches des portions d'extrémité dépassantes des aimants (22), d'où un fonctionnement optimal de la détection de position du rotor nécessaire à l'autopilotage de ce genre de machine tournante. L'existence de ces prolongements à l'extrémité des aimants (22) permet donc de réaliser astucieusement deux fonctions importantes de façon distincte.

Le boîtier (11) est fixé, à l'aide de deux doigts (12, 13), au niveau de la face frontale de la culasse magnétique périphérique (1) et, via une patte (14), dans une ouverture (15) prévue à cet effet dans le flasque (16) de fermeture prévu à l'une des extrémités axiales du moteur. Il est ainsi parfaitement positionné et immobilisé en vue de maintenir constante la position de l'aimant permanent (10) par rapport au rotor (20) et à ses aimants (22). Le flasque (16) comporte par ailleurs d'autres ouvertures, dont une ouverture (17) pour le connecteur électronique (8) et des ouvertures (18) prévues pour laisser un passage aux broches (6') de connexion. Un palier (19) entoure une ouverture centrale (9) de passage de l'arbre (21) du rotor (20).

L'invention ne se limite bien entendu pas aux exemples décrits et expliqués en référence aux figures, mais elle englobe les variantes et versions qui entrent dans la portée des revendications.

## Revendications

1. Machine électrique tournante synchrone autopilotée de type moteur sans balai à rotor (20) dont le pourtour est recouvert d'aimants permanents (22), et munie d'un dispositif de freinage et d'immobilisation du rotor (20), le dispositif de freinage et d'immobilisation du rotor (20) comportant au moins un aimant permanent (10) monté fixe par rapport au stator au voisinage d'une extrémité du rotor (20), **caractérisée en ce que** les aimants permanents (22) équipant le pourtour du rotor (20) comportent des prolongements dépassant du stator dans une direction parallèle à l'axe de rotation du rotor (20), au voisinage desquels est fixé au moins un aimant permanent (10) du dispositif de freinage et d'immobilisation du rotor (20), chaque aimant permanent (10) du dispositif de freinage et d'immobilisation du rotor étant logé dans un boîtier (11) fixé en appui contre une face frontale d'une culasse magnétique polaire (1) du stator entourant les bobines statoriques (2).

2. Machine électrique tournante synchrone autopilotée de type moteur sans balai selon la revendication précédente, **caractérisée en ce que** lesdits prolongements sont polarisés dans une direction radiale, la polarisation de deux aimants permanents adjacents (22) du pourtour du rotor (20) étant toujours inversée, et **en ce que** au moins un aimant permanent (10) du dispositif de freinage et d'immobilisation du rotor (20) est placé, dans une direction radiale, en regard des prolongements dépassant du stator dans une direction parallèle à l'axe de rotation du rotor (20).

3. Machine électrique tournante synchrone autopilotée de type moteur sans balai selon la revendication 1, **caractérisée en ce que** lesdits prolongements dépassant du stator dans une direction parallèle à l'axe de rotation du rotor (20) sont polarisés dans une direction axiale, la polarisation de deux aimants permanents (22) adjacents du pourtour du rotor (20) étant toujours inversée, et **en ce qu'**au moins un aimant permanent (10) du dispositif de freinage et d'immobilisation du rotor (20) est placé, dans une direction axiale, en regard des extrémités des prolongements dépassant du stator dans une direction parallèle à l'axe de rotation du rotor (20).

4. Machine électrique tournante synchrone autopilotée de type moteur sans balai selon l'une des revendications 1 et 3, **caractérisée en ce que** lesdits prolongements dépassant du stator dans une direction parallèle à l'axe de rotation du rotor (20). sont polarisés dans une direction axiale, la polarisation de deux aimants permanents (22) adjacents du pourtour du rotor (20) étant toujours inversée, et **en ce qu'**au moins un capteur par exemple à effet Hall est placé sur une carte électronique (7) disposée au voisinage et en regard des extrémités des prolongements dépassant du stator dans une direction parallèle à l'axe de rotation du rotor (20).

5. Machine électrique tournante synchrone autopilotée de type moteur sans balai selon l'une des revendications précédentes, **caractérisée en ce qu'**au moins un aimant permanent (10) du dispositif de freinage et d'immobilisation du rotor prend la forme d'une pastille.

6. Machine électrique tournante synchrone autopilotée de type moteur sans balai selon l'une des revendications précédentes, **caractérisée en ce que** le dispositif de freinage et d'immobilisation du rotor (20) comporte un unique aimant permanent (10).

7. Machine électrique tournante synchrone autopilotée de type moteur sans balai selon l'une des revendications précédentes, **caractérisée en ce que** le rotor (20) est placé à l'intérieur du stator.

8. Utilisation d'une machine électrique tournante synchrone autopilotée de type moteur sans balai selon l'une des revendications précédentes pour l'entrainement d'un moyeu de volet roulant motorisé.

## Patentansprüche

1. Selbstgesteuerte
synchron rotierende elektrische Maschine vom Typ bürstenloser Rotormotor (20), dessen Umfang mit Permanentmagneten (22) bedeckt ist und der mit einer Brems- und Immobilisierungsvorrichtung des Rotors (20) ausgestattet ist, wobei die Brems- und Immobilisierungsvorrichtung des Rotors (20)
mindestens einen Permanentmagneten (10) umfasst, der relativ zum Stator fest in der Nähe eines Endes des Rotors (20) montiert ist, **dadurch gekennzeichnet, dass** die um den Umfang des Rotors (20) angebrachten Permanentmagnete (22) in einer Richtung parallel zur Drehachse des Rotors (20) vom Stator vorstehende Verlängerungen umfassen, in deren Nähe mindestens ein Permanentmagnet (10) der Brems- und Immobilisierungsvorrichtung des Rotors (20) befestigt ist,
wobei jederPermanentmagnet (10) der Brems- und Immobilisierungsvorrichtung des Rotors in einem Gehäuse (11) untergebracht ist, das an einer Vorderseite eines Magnetpoljochs (1) des Stators, das die Statorspulen (2) umgibt, unterstützend befestigt ist.

2. Selbstgesteuerte synchron rotierende elektrische Maschine vom Typ bürstenloser Motor nach dem vorstehenden Anspruch,
**dadurch gekennzeichnet, dass** die Verlängerungen in radialer Richtung polarisiert sind, wobei die Polarisierung zweier benachbarter Permanentmagnete (22) am Umfang des Rotors (20) immer umgekehrt ist, und dass mindestens ein Permanentmagnet (10) der Brems- und Immobilisierungsvorrichtung des Rotors (20) in einer radialen Richtung, bezüglich der Verlängerungen, die vom Stator in einer Richtung parallel zur Drehachse des Rotors (20) vorstehen, platziert ist.

3. Selbstgesteuerte synchron rotierende elektrische Maschine vom Typ bürstenloser Motor nach Anspruch 1,
**dadurch gekennzeichnet, dass** die Verlängerungen, die vom Stator in einer Richtung parallel zur Drehachse des Rotors (20) vorstehen, in einer axialen Richtung polarisiert sind, wobei die Polarisierung zweier benachbarter Permanentmagnete (22) am Umfang des Rotors (20) immer umgekehrt ist, und dass mindestens ein Permanentmagnet (10) der Brems- und Immobilisierungsvorrichtung des Rotors (20) in axialer Richtung bezüglich der Enden der Verlängerungen, die vom Stator in einer Richtung parallel zur Drehachse des Rotors (20) vorstehen, platziert ist.

4. Selbstgesteuerte synchron rotierende elektrische Maschine vom Typ bürstenloser Motor nach einem der Ansprüche 1 und 3, **dadurch gekennzeichnet, dass** die Verlängerungen, die vom Stator in einer Richtung parallel zur Drehachse des Rotors (20) vorstehen,
in einer axialen Richtung polarisiert sind, wobei die Polarisierung zweier benachbarter Permanentmagnete (22) am Umfang des Rotors (20) immer umgekehrt ist, und dass mindestens ein Sensor, beispielsweise ein Hall-Effekt-Sensor, auf einer elektronischen Karte (7) platziert ist, die in der Nähe und bezüglich der Enden der Verlängerungen, die vom Stator in einer Richtung parallel zur Drehachse des Rotors (20) vorstehen, angeordnet ist.

5. Selbstgesteuerte synchron rotierende elektrische Maschine vom Typ bürstenloser Motor nach einem der vorstehenden Ansprüche,
**dadurch gekennzeichnet, dass** mindestens ein Permanentmagnet (10) der Brems- und Immobilisierungsvorrichtung des Rotors die Form einer Tablette hat.

6. Selbstgesteuerte synchron rotierende elektrische Maschine vom Typ bürstenloser Motor nach einem der vorstehenden Ansprüche,
**dadurch gekennzeichnet, dass** die Brems- und Immobilisierungsvorrichtung des Rotors (20) einen einzigen Permanentmagneten (10) umfasst.

7. Selbstgesteuerte synchron rotierende elektrische Maschine vom Typ bürstenloser Motor nach einem der vorstehenden Ansprüche,
**dadurch gekennzeichnet, dass** der Rotor (20) innerhalb des Stators platziert ist.

8. Verwendung einer selbstgesteuerten synchron rotierenden elektrischen Maschine vom Typ bürstenloser Motor nach einem der vorstehenden Ansprüche zum Antrieb einer motorisierten Rollladennabe.

## Claims

1. Self-propelled synchronous rotating electrical machine of the brushless motor type with a rotor (20), the periphery of which is covered with permanent magnets (22), and provided with a device for braking and immobilizing the rotor (20), the device for braking and immobilizing the rotor (20)
comprising at least one permanent magnet (10) which is fixedly mounted with respect to the stator in the vicinity of one end of the rotor (20), **characterized in that** the permanent magnets (22) fitted on the periphery of the rotor (20) comprise extension pieces projecting from the stator in a direction parallel to the axis of rotation of the rotor (20), in the vicinity of which extension pieces at least one permanent magnet (10) of the device for braking and immobilizing the rotor (20) is fixed,
each permanent magnet (10) of the device for braking and immobilizing the rotor being accommodated in a housing (11) fixed against a front face of a polar magnetic yoke (1) of the stator surrounding the stator coils (2).

2. Self-propelled synchronous rotating electrical machine of the brushless motor type according to the preceding claim, **characterized in that** said extension pieces are polarized in a radial direction, the polarization of two adjacent permanent magnets (22) on the periphery of the rotor (20) always being reversed, **and in that** at least one permanent magnet (10) of the device for braking and immobilizing the rotor (20) is placed, in a radial direction, opposite the extension pieces projecting from the stator in a direction parallel to the axis of rotation of the rotor (20).

3. Self-propelled synchronous rotating electrical machine of the brushless motor type according to claim 1,
**characterized in that** said extension pieces projecting from the stator in a direction parallel to the axis of rotation of the rotor (20) are polarized in an axial direction, the polarization of two adjacent permanent magnets (22) on the periphery of the rotor (20) always being reversed, **and in that** at least one permanent magnet (10) of the device for braking and immobilizing the rotor (20) is placed, in an axial direction, opposite the ends of the extension pieces projecting from the stator in a direction parallel to the axis of rotation of the rotor (20).

4. Self-propelled synchronous rotating electrical machine of the brushless motor type according to either of claims 1 and 3, **characterized in that** said extension pieces projecting from the stator in a direction parallel to the axis of rotation of the rotor (20) are polarized in an axial direction, the polarization of two adjacent permanent magnets (22) on the periphery of the rotor (20) always being reversed,
**and in that** at least one sensor, for example a Hall effect sensor, is placed on an electronic board (7) arranged in the vicinity of and facing the ends of the extension pieces projecting from the stator in a direction parallel to the axis of rotation of the rotor (20).

5. Self-propelled synchronous rotating electrical machine of the brushless motor type according to any of the preceding claims, **characterized in that** at least one permanent magnet (10) of the device braking and immobilizing the rotor is in the form of a disc.

6. Self-propelled synchronous rotating electrical machine of the brushless motor type according to any of the preceding claims, **characterized in that** the device for braking and immobilizing the rotor (20) comprises a single permanent magnet (10).

7. Self-propelled synchronous rotating electrical machine of the brushless motor type according to any of the preceding claims, **characterized in that** the rotor (20) is placed inside the stator.

8. Use of a self-propelled synchronous rotating electrical machine of the brushless motor type according to any of the preceding claims for driving a motorized roller shutter hub.
